# EUROPEAN PATENT APPLICATION

(11) **EP 1 809 031 A2**
(43) Date of publication of application: **18.07.2007**
(21) Application number: 07100496.4
(22) Date of filing: 12.01.2007
(51) Int. Cl.: H04N 5/445

(54) **DMB Terminal and Method for Providing Broadcast Preview Service**

(30) Priority: 13.01.2006 KR 20060004141
(71) Applicant: Samsung Electronics Co., Ltd., Suwon-si, Gyeonggi-Do (KR)
(72) Inventor: Lee, Kyoung-Shin, Gyeonggi-do (KR); Jung, Ji-Wuck, Gyeonggi-do (KR); Kim, Young-Jip, Gyeonggi-do (KR); Cho, Jeong-Sik, Gyeonggi-do (KR); Kim, Sun-Mi, Gyeonggi-do (KR)
(74) Representative: Zimmer, Franz-Josef

(57) **Abstract**

Disclosed is a DMB (Digital Multimedia Broadcasting) terminal and a method for providing a broadcast preview service in a terrestrial DMB system. The method provides a broadcasting service preview by a DMB terminal in a DMB system having a DMB broadcasting station for providing the DMB terminal with ensembles containing at least one broadcasting service provided by respective service providers. The method includes receiving all of the ensembles at a broadcasting service preview request of a user, creating preview images for broadcasting services within the ensembles, and displaying the preview images on a screen together with corresponding broadcasting service information. The user can obtain detailed information regarding available broadcasting services and conveniently select a desired broadcasting service without additional operation.

## Description

The present invention relates to a terrestrial DMB (Digital Multimedia Broadcasting) system, and more particularly to a DMB terminal and a method for providing a broadcast preview service in a terrestrial DMB system.

The terrestrial DMB system is based on a DAB (Digital Audio Broadcasting) system, particularly Eureka-147, which is a European digital radio broadcasting standard for providing both high-quality (i.e., CD-grade) audio services and data services. The terrestrial DMB system has been developed for the purpose of providing multimedia broadcasting services, including video services.

Compared with conventional digital broadcasting systems, such as ATSC (Advanced Television Systems Committee) and DVB (Digital Video Broadcasting) systems, the terrestrial DMB system has an advantage in that it enables subscribers on the move to watch broadcasts. Particularly, a subscriber of the terrestrial DMB system can watch broadcasts from a DMB receiver terminal regardless of location.

The terrestrial DMB system has another advantage in that subscribers are provided with video, audio, and data services. Accordingly, more channels and services are available from the terrestrial DMB system than are available from conventional, stationary terrestrial digital broadcasting systems.

In general, terrestrial DMB signals include ensembles, each of which is composed of a number of services including service components. In other words, an ensemble is a basic unit of terrestrial DMB signals and, by selecting a desired service within an ensemble, a user is provided with the service. An ensemble may contain a plurality of video, audio, and data services.

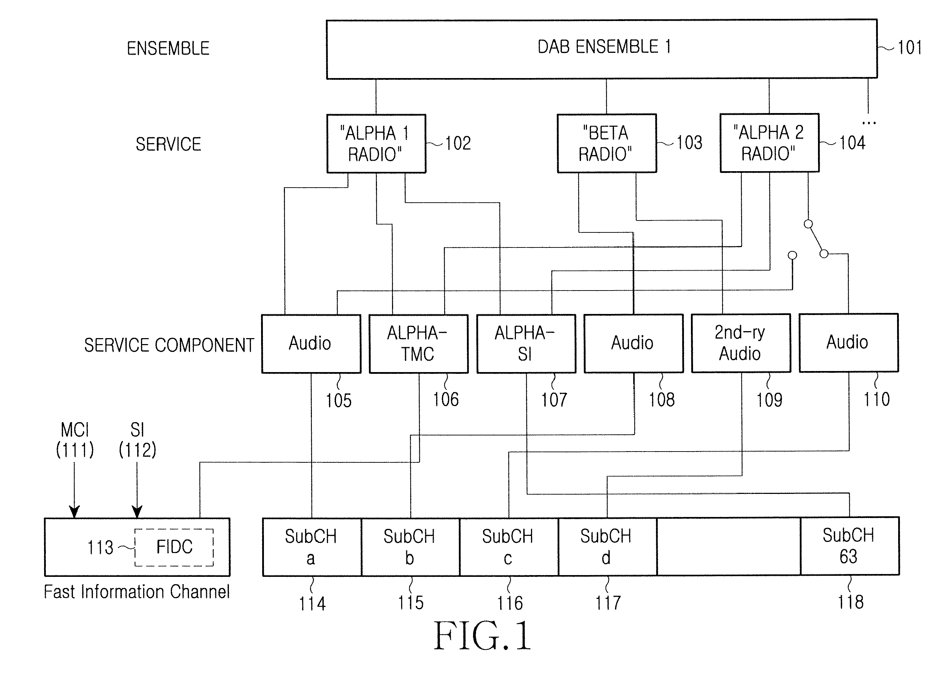

FIG. 1 is a graph illustrating an example of a structure of an ensemble used in a conventional terrestrial DMB system.

Referring to FIG. 1, the ensemble used in a terrestrial DMB system includes a number of services, each of which includes service components. The structure of ensembles conforms to DAB standards proposed by Eureka-147. Particularly, the ensemble 101 labeled "DAB ENSEMBLE 1" includes services 102, 103, and 104 labeled "ALPHA 1 RADIO", "BETA RADIO", and "ALPHA 2 RADIO", respectively. Each service includes a plurality of service components 105 to 110.

The services within the ensemble are included in sub-channels 114 to 118 labeled SubCH, which are portions of an ensemble frame. Broadcasting service configuration information of the sub-channels is obtained from MCl (Multiplex Configuration Information) 111 and Sl (Service Information) 112, which are received via an FIC (Fast Information Channel).

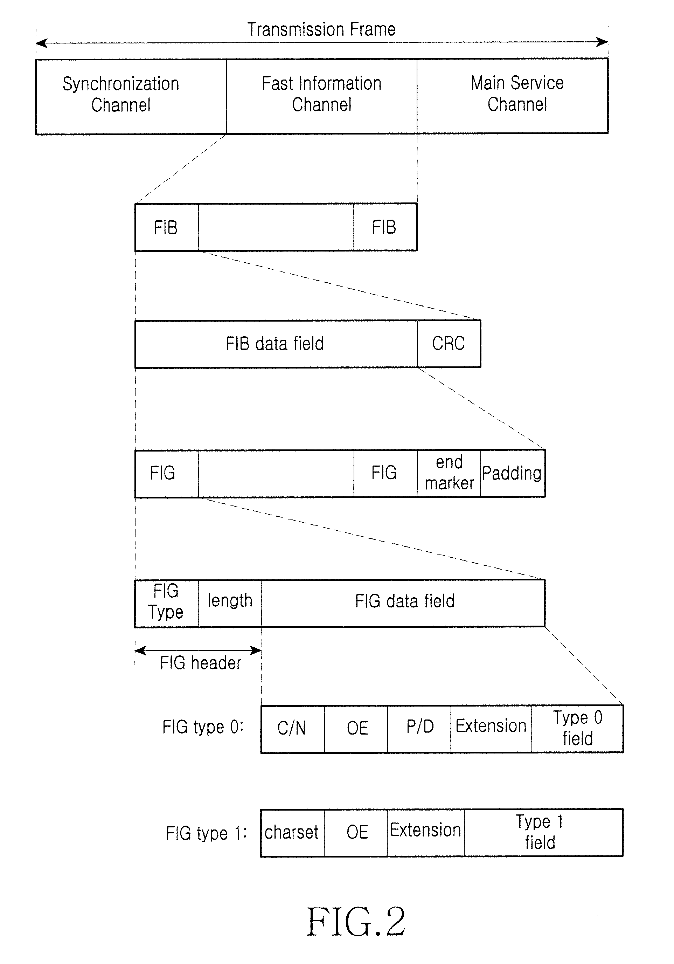

FIG. 2 is a graph illustrating a configuration of a transmission frame of a conventional terrestrial DMB system. Particularly, the structure of digital broadcasting data (hereinafter, "broadcasting data") transmitted via an FIC is shown in detail. Broadcast transmission frames include three types of channels, particularly an SC (Synchronization channel) for signal synchronization, an FIC having service configuration information for MSC, and an MSC (Main Service channel) via which data is actually transmitted and provided. Terrestrial DMB broadcasting stations generally emit broadcasting service configuration information of service channels via the FIC. In order to increase the transmission efficiency of the broadcasting service configuration information, the terrestrial DMB broadcasting stations divide the information into small blocks, particularly FIBs (Fast Information Blocks), and repeatedly emit them for a predetermined broadcasting period.

Referring to FIG. 2, data transmitted via the FIC includes a number of FIBs, as mentioned above. Each FIB is composed of a number of FIGs. (Fast Information Groups). The type of information contained in each FIG is described in the header of the FIG. For example, FIG. 2 shows FIG type 0 and FIG type 1. The FIG type 0 indicates that the FIG contains MCI information and Sl information, and FIG type 1 indicates that the FIG contains information regarding labels for information content display of sub-channels.

When a user tunes his DMT terminal to a specific ensemble, the terminal receives FIBs for a period via the FIC and parses them. When broadcasting service configuration information (e.g. MCI information 111, Sl information 112) is extracted as a result of the parsing process, the user is provided with broadcasting services constituting the MSC of the ensemble.

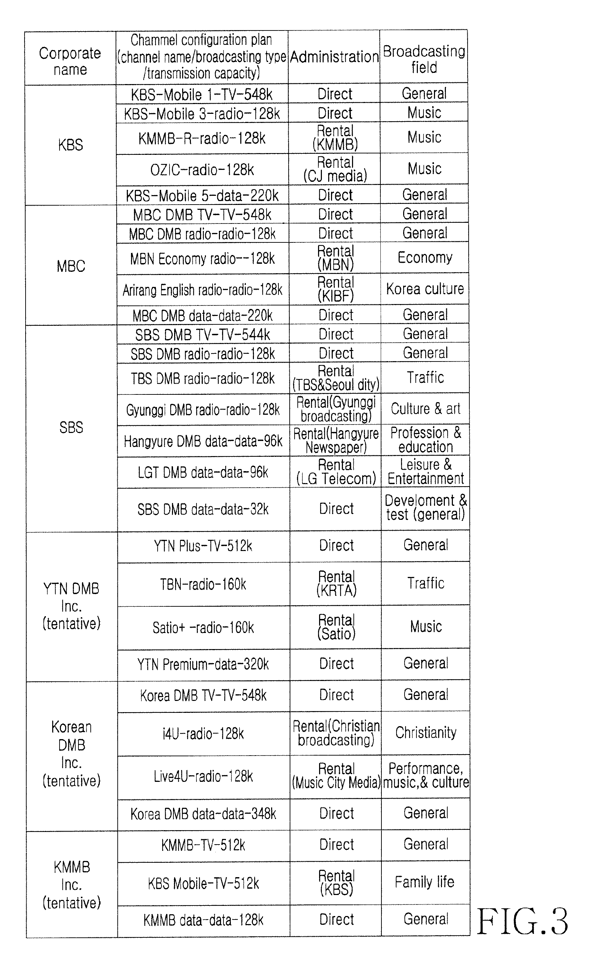

FIG. 3 is a table illustrating a broadcasting service configuration table for a conventional DMB system. In FIG. 3, an ensemble used by MBC includes one video service, three audio services, and one data service. This shows the characteristics of terrestrial DMB systems, in which a number of services including video, audio, and data services are transmitted via basic broadcasting signals. As such, different service providers can provide a number of video, audio, and data services.

However, current terrestrial DMB systems have a problem in that, when a subscriber desires information about available broadcasting services, only the title of services is provided, as shown in FIG. 3. However, the title alone cannot give sufficient information to select a desired broadcasting service. Therefore, it is desirable to provide a terrestrial DMB system capable of providing subscribers with detailed information regarding available broadcasting services.

Accordingly, the present invention has been made to solve the above-mentioned problems occurring in the prior art. It is the object of the present invention to provide a system and a method for providing preview images of all broadcasting services available from a DMB broadcasting station when a DMB terminal is in a broadcasting service mode.

This object is solved by the subject matter of the independent claims.

Preferred embodiments are defined in the dependent claims.

In order to accomplish this object, there is provided a DMB terminal for providing a broadcasting service preview in a DMB system having a DMB broadcasting station for providing the DMB terminal with ensembles containing at least one broadcasting service provided by respective service providers, the DMB terminal including a DMB receiver for receiving the ensembles and a controller for receiving all of the ensembles at a broadcasting service preview request and creating preview images for broadcasting services within the ensembles, the controller displaying the preview images on a screen together with corresponding broadcasting service information.

In accordance with another aspect of the present invention, there is provided a method for providing a broadcasting service preview by a DMB terminal in a DMB system having a DMB broadcasting station for providing the DMB terminal with ensembles containing at least one broadcasting service provided by respective service providers, the method including receiving all of the ensembles at a broadcasting service preview request of a user and creating preview images for broadcasting services within the ensembles, and displaying the preview images on a screen together with corresponding broadcasting service information.

The present invention will be more apparent from the following detailed description taken in conjunction with the accompanying drawings, in which:
FIG. 1 is a graph illustrating a structure of an ensemble used in a conventional terrestrial DMB system;
FIG. 2 is a graph illustrating an example of a configuration of a transmission frame of a conventional terrestrial DMB system;
FIG. 3 is a table illustrating an example of a broadcasting service configuration table for a conventional terrestrial DMB system;
FIG. 4 shows the configuration of a terrestrial DMB system according to the present invention;
FIG. 5 is a flowchart showing steps for providing a broadcast preview by using a DMB terminal according to the present invention; and
FIG. 6 shows an example of a broadcast preview screen of a DMB terminal according to the present invention.

Hereinafter, preferred embodiments of the present invention will be described with reference to the accompanying drawings. In the following description of the present invention, a detailed description of known functions and configurations incorporated herein is omitted to avoid making the subject matter of the present invention unclear.

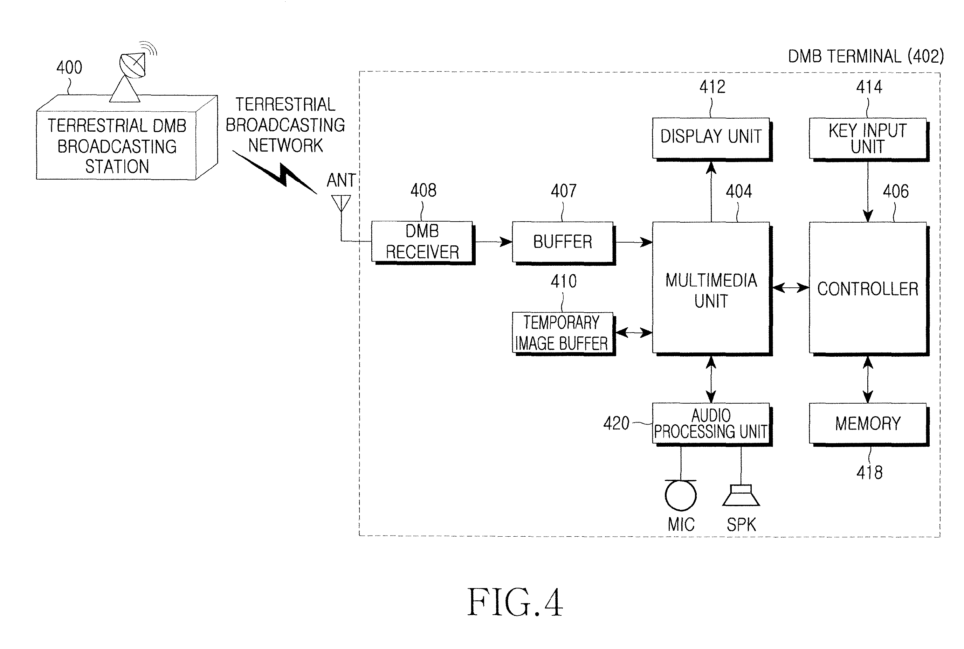

The configuration and operation of a terrestrial DMB system for providing a broadcast preview service by using a DMB terminal according to the present invention will now be described with reference to FIG. 4, which shows the configuration of a terrestrial DMB system according to the present invention. It is assumed in the following description that a DMB terminal 402 is a terminal adapted to receive terrestrial DMB signals for a terrestrial DMB service.

A terrestrial DMB broadcasting station 400 receives broadcasting data for video, audio, and data services from a number of service subscribers and transmits the data as broadcasting services via a terrestrial public network.

Based on the type and information of broadcasting services within each ensemble received from the terrestrial DMB broadcasting station 400, the DMB terminal 402 creates preview images for respective broadcasting services and displays the images on the screen. The DMB terminal 402 includes a DMB receiver 408, a buffer 407, a temporary image buffer 410, a multimedia unit 404, a display unit 412, an audio processing unit 420, a controller 406, a key input unit 414, and a memory 418.

The controller 406 controls the overall operation of the DMB terminal 402. When the user requests a broadcasting service preview, the controller 406 receives all ensembles available from the terrestrial DMB broadcasting station 400 and checks the type and information of broadcasting services within the received ensembles.

A method for checking the type and information of broadcasting services within ensembles will now be described in detail. A DAB transmission system includes three channels, particularly an SC (Synchronization channel), an FIC (Fast Information channel), and an MSC (Main Service Channel). When the FIC is used, the number, type, and Sld (service ID) of applications (i.e., broadcasting services) available from the current ensemble are known. The FIC consists of a number of FIBs, each of which is includes of a number of FIGs. There are eight types of FIGs., and corresponding information is obtained from type 0 FIG. When the extension of FIG data field 0 is 13, information regarding the Sld field, user application number field, and user application type field is obtained. As such, the FIC included in received broadcasting data is used to check the type and information of broadcasting services within ensembles. In the case of an audio or video service, which is received as a stream, data can be extracted from SubChld (sub-channel ID). When it comes to a data service, it is either received as a PAD (Program Associated Data) stream together with an audio service or received as an independent a packet-type service. In the former case, corresponding data can be extracted when a service component has the same Sld and SCldS as obtained from FIG type 0, extension 13 and when subChld of the service component is obtained from FIG type 0, extension 8. In the latter case, SCld is obtained from FIG type 0, extension 8 and used to obtain SubChld and packet address from FIG type 0, extension 3.

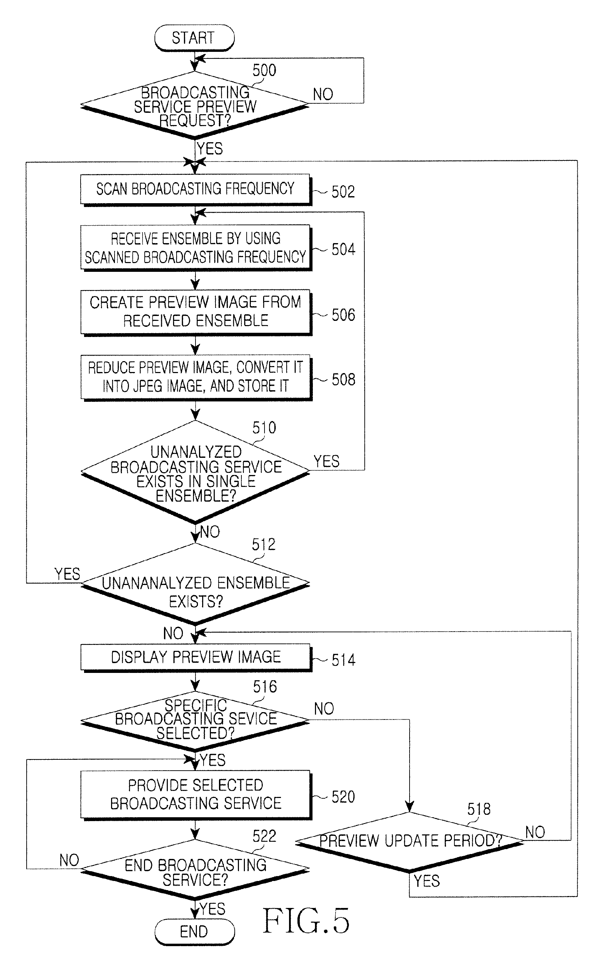

The controller 406 decodes broadcasting data within received ensembles and stores initial images of the broadcasting data in the temporary image buffer 410 as preview images together with the type and information of broadcasting services within ensembles, which have been obtained in the above-mentioned process. The controller 406 then reduces the preview images, which have been stored in the temporary image buffer 410, and stores them again in the temporary image buffer 410 as JPEG images. Together with the preview images of respective broadcasting services, which have been stored in this manner, the controller 406 displays information regarding corresponding services on the screen. When the controller 406 receives a broadcasting frequency in a broadcasting frequency scanning process, it receives an ensemble based on that frequency and creates preview images of broadcasting services, which are included in the ensemble. The controller 406 repeats the same process for creating preview images of broadcasting services for every scanned broadcasting frequency. For example, when DMB broadcasting services are provided by six service provides as shown in FIG. 3, a total of six broadcasting frequencies will be scanned accordingly. Among the scanned broadcasting frequencies, the ensemble provided by service provider "YTN DMB Inc." includes one video service, two audio services, and one data service. The controller 406 then creates preview images of four broadcasting services from "YTN DMB Inc." A detailed description of operation of the controller 406 will be given later with reference to FIG. 5.

The DMB receiver 408 receives broadcasting data via an antenna and demultiplexes transmission packets. Through a decoding process, the DMB receiver 408 parses the broadcasting data into video and audio data.

The multimedia unit 404 outputs video and audio data, which have been transmitted via the DMB receiver 408, to the display unit 412 and the audio processing unit 420, respectively. The multimedia unit 404 may include a CODEC (CODER/DECODER) not shown). In the case of video data of respective broadcasting services transmitted from the DMB receiver 408, the multimedia unit 404 reduces initial images and converts them into still images under the control of the controller 406. After conversion, the images are stored in the temporary image buffer 410 together with corresponding broadcasting service information. The initial images are displayed on the screen as preview images in response to the user's request for a broadcasting service preview.

The buffer 407 includes video and audio buffers for storing video and audio data inputted from the DMB receiver 408, respectively. The inputted data is buffered and outputted.

The temporary image buffer 410 stores initial images of broadcasting services, which have been transmitted from the multimedia unit 404, together with corresponding broadcasting service information. When the controller 406 requests output of stored images, the temporary image buffer 410 outputs them to the display unit 412.

The display unit 412 receives key input data from the key input unit 414 and displays corresponding images under the control of the controller 406. When the user sets up or drives necessary functions, the display unit 412 provides visual indication accordingly. The display unit 412 displays images resulting from broadcasting services under the control of the controller 406. When the user requests a preview during broadcasting services, the display unit 412 displays preview images in response to the request. The display unit may include a liquid crystal display (LCD) and/or a touch-sensitive input device.

The audio processing unit 420 is connected to a microphone (MIC) and a speaker (SPK) so as to convert audio signals transmitted from the multimedia unit 404 and output the converted audio signals via the speaker SPK. The audio processing unit 420 converts audio signals, which have been received from the microphone MIC, into data and transmit the data to the multimedia unit 404.

The key input unit 414 provides user interface and, when one of its keys is operated, outputs a corresponding key input data, which is transmitted to the controller 406. The controller 406 then determines which key has been operated from the key input data and performs corresponding operation. The key input unit 414 includes a preview key for previewing broadcasting services. The preview key is either one of existing function keys and/or a separate key.

The memory 418 stores information regarding overall operation of the DMB terminal 402, as well as information regarding broadcasting service provisions.

Steps for providing a DMB broadcasting service preview by using a DMB terminal 402, which is configured as shown in FIG. 4, will now be described with reference to FIG. 5, which is a flowchart showing steps for providing a broadcast preview by using a DMB terminal according to the present invention.

In step 500, the controller 406 monitors the user's request for a broadcasting service preview while DMB broadcasting services are provided. In order to make the request, the user may operate the keys of the key input unit 414 or select a preview item from a menu.

When the user requests a broadcasting service preview in step 500, the controller 406 proceeds to step 502 and scans broadcasting frequencies. In step 504, the controller 406 fixes the scanned broadcasting frequencies and decodes DMB broadcasting data received by the DMB receiver 408. Each scanned broadcasting frequency is used to receive an ensemble, and an FIG within the ensemble is analyzed so as to check the type and configuration information of broadcasting services within the ensemble.

After preceding from step 504 to step 506, the controller 406 creates a preview image of one of the broadcasting services included in an ensemble. The preview image is created differently depending on the type of the broadcasting service (i.e., video service, audio service, and/or data service).

Firstly, when the broadcasting service is a video service, initially-arriving I frame (intra-frame) alone is decoded and used to create a still image, which is stored in the temporary image buffer 410 as a preview image together with corresponding broadcasting service information.

Secondly, when the broadcasting service is an audio service, a PAD screen is displayed, if PAD (Program Associated Data) exists. When an audio service alone arrives, information regarding the audio service is displayed on an image, which has been designated as a preview background screen. As used herein, PAD refers to data additionally provided during an audio service.

A part of conventional data services, such as DLS(Dynamic Label Segment), slideshow, TPEG(Transport Protocol Experts Group), and BWS(Broadcast Website), is currently provided as the PAD. When the PAD is transmitted together with broadcasting data for an audio service, the user is informed that the PAD can be displayed on the screen in the same method as will be described later with reference to a data service and that an audio service exists.

When a broadcasting service preview is provided in this manner, all sound settings may be switched off.

Thirdly, when the broadcasting service is a data service, the broadcasting data includes DLS (Dynamic Label Segment), BWS (Broadcast Website), slideshow, TPEG (Transport Protocol Experts Group), and DGPS (Differential Global Positioning System). In the case of TPEG and DGPS, it is meaningless to provide a preview as independent information. Therefore, data of BWS, DLS, and slideshow types are solely extracted and displayed as preview images. Particularly, the DLS is not transmitted as independent data, but is always accompanied by an audio service. In the case of BWS, the first web page alone is displayed as a preview image. An MOT (Multimedia Object Transfer) object carries a content name. When a content name parameter conforms to the content name, the parameter may be used to create a preview image corresponding to the first page. As used herein, MOT refers to a protocol used to transmit data in a DAB system. An MOT object is a set of data or file segments transmitted according to the MOT protocol and includes a header and a body. The body of an MOT object contains entire data or file. The MOT data includes EPG, BWS, slideshow, TPEG, and download Java application. In the case of slideshow, the first page alone is created as a preview image. Alternatively, a preview image is created by decoding the first object only, because slides are transmitted one by one. In the case of DLS, which is a character type, a preview image is created by decoding a single object.

After creating broadcasting service preview images in this manner, the controller 406 proceeds to step 508 and reduces the preview images by applying an image reduction algorithm. The preview images are converted into still images and stored in the temporary image buffer 410 together with corresponding broadcasting service information.

The controller 406 proceeds to step 510, in which it analyzes all broadcasting services included in the ensemble received in step 504 and checks if corresponding preview images have been created. When there are broadcasting services which have skipped analysis in step 510, the controller 406 returns to step 504. Then, the controller 406 analyzes the remaining broadcasting services of the ensemble (i.e., unanalyzed broadcasting services) and creating preview images, which are stored together with corresponding broadcasting service information. In this manner, steps 504 to 510 are repeated until every broadcasting service within an ensemble has a corresponding preview image created and stored.

When it is determined that all broadcasting services within an ensemble have been analyzed in step 510, the controller 406 proceeds to step 512 and determines whether all ensembles available from the terrestrial DMB station 400 have been analyzed. If all ensembles have been analyzed, the controller 406 proceeds to step 514. If not, the controller 406 returns to step 502 and repeats steps 502 to 510. Particularly, the controller 406 scans a broadcasting frequency for receiving the next ensemble and receives the next ensemble by using the scanned broadcasting frequency. The controller 406 then creates preview images of broadcasting services within the received ensemble and stores the preview images.

After creating and storing preview images of all broadcasting services within ensembles, which are available to the DMB terminal 402 from the terrestrial DMB broadcasting station 400, in steps 502 and 512, the controller 406 proceeds to step 514 and displays the preview images of respective broadcasting services, which have been stored in the temporary image buffer 410, via the display unit 412.

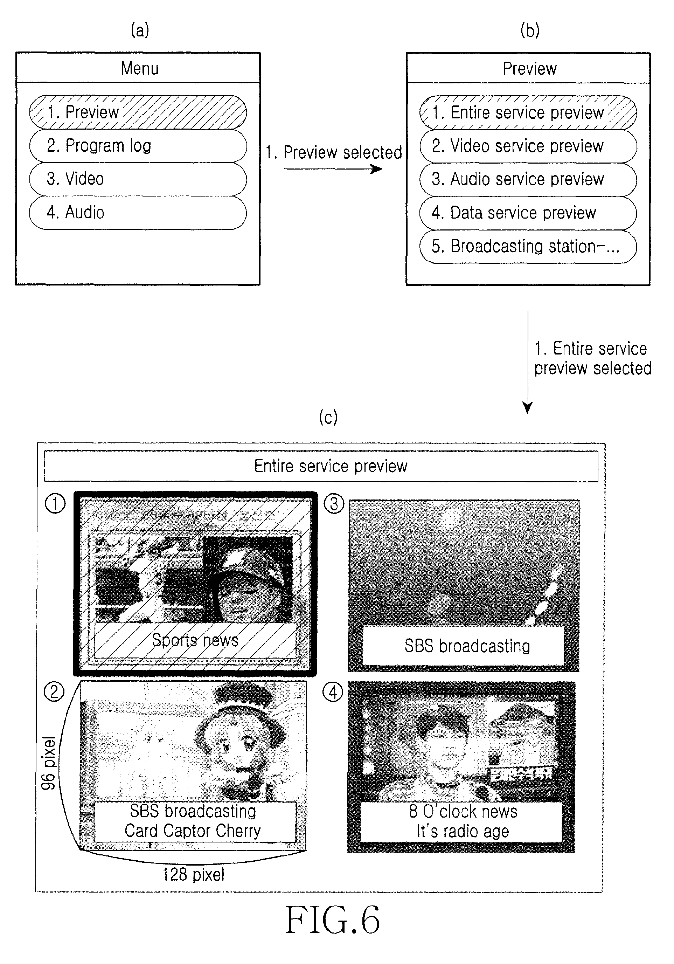

The controller 406 then proceeds to step 516 and determines whether the user has selected a specific broadcasting service. Referring to FIG. 6, when the user successively selects "1. Preview" and "1. Entire service preview" items, for example, the controller 406 analyzes all ensembles and displays preview images for all broadcasting services on the screen, as shown in (c) of FIG. 6. When the user selects one of "2. Video service preview", "3. Audio service preview", and "4. Data service preview" items shown in (b) of FIG. 6, the controller 406 analyzes the corresponding service and provides its preview. When the user chooses a specific broadcasting station (i.e., service provider), the controller 406 analyzes corresponding ensembles and provides a preview accordingly.

When the user selects "1. Entire service preview" item from "Preview" menu shown in (b) of FIG. 6 and chooses preview image (1) from the resultant screen shown in (c) by using the key input unit 414, the controller 406 proceeds to step 520. Based on the broadcasting frequency of a selected broadcasting service, the controller 406 receives a corresponding ensemble and provides the user with a desired broadcasting service in step 520. The controller 406 then proceeds to step 522 and checks if the user wants to end the broadcasting service. If there is input for ending the broadcasting service, the controller 406 ends the service. If not, the controller 406 continuously proceeds to step 520 and provides the broadcasting service. Meanwhile, if specific broadcasting service is not selected in step 516, controller 406 determines whether a preview update period has arrived in step 518. If the preview update period has arrived, the controller 406 proceeds to step 502 and receives broadcasting data for all ensembles. The controller 406 then creates and updates preview images for respective broadcasting services and displays them on the display unit 412.

When the user selects no broadcasting service from displayed preview images for broadcasting services in step 516, the controller 406 proceeds to step 518 and checks if the preview update period has arrived. If so, the controller 406 repeats steps 502 to 514, in which its receives broadcasting data for all ensembles, creates preview images for respective broadcasting services, updates the preview images, and displays the updated preview images on the display unit 412.

In summary, according to the present invention, broadcasting services within all ensembles from a terrestrial DMB broadcasting station are analyzed, preview images are created for respective broadcasting services, and the user is provided with the preview images.

As mentioned above, the present invention is advantageous in that preview images of broadcasting services available to a DMB terminal are provided as still images together with corresponding broadcasting service information. As a result, the user can obtain detailed information regarding available broadcasting services and conveniently select a desired broadcasting service without additional operation.

While the invention has been shown and described with reference to certain preferred embodiments thereof, it will be understood by those skilled in the art that various changes in form and details may be made therein without departing from the scope of the invention as defined by the appended claims.

## Claims

1. A Digital Multimedia Broadcasting, DMB, terminal for providing a broadcasting service preview in a DMB system having a DMB broadcasting station for providing the DMB terminal with ensembles containing at least one broadcasting service provided by respective service providers, the DMB terminal comprising:
a DMB receiver for receiving the ensembles; and
a controller for receiving all of the ensembles at a broadcasting service preview request and creating preview images for broadcasting services within the ensembles, and displaying the preview images on a screen together with corresponding broadcasting service information.

2. The DMB terminal as claimed in claim 1, further comprising a temporary image buffer for temporarily storing the preview images for the broadcasting services.

3. The DMB terminal as claimed in claim 2, wherein the controller checks broadcasting service information within the received ensembles, creates preview images based on checked broadcasting service types, and stores created preview images in the temporary image buffer together with corresponding broadcasting service information.

4. The DMB terminal as claimed in claim 3, wherein the controller decodes a first intra-frame, sets a decoded frame as a preview image, reduces the preview image, converts the preview image so as to be suitable for storage, and stores the preview image together with corresponding broadcasting service information for within the ensembles.

5. The DMB terminal as claimed in claim 3 or 4, wherein the controller sets an image, the image having been preset for an audio service, as a preview image and stores the preview image together with corresponding broadcasting service information for an audio service within the ensembles.

6. The DMB terminal as claimed in one of claims 1 to 5, wherein the broadcasting service preview request is made by selecting an item from a preview menu including an entire service preview item, a video service preview item, an audio service preview item, a data service preview item, and a service provider-based preview item.

7. The DMB terminal as claimed in claim 6, wherein the controller displays preview images for all broadcasting services within all ensembles on the screen together with corresponding broadcasting service information when the broadcasting service preview request is made by selecting the entire service preview item.

8. The DMB terminal as claimed in claim 6, wherein the controller displays preview images for all video services within all ensembles on the screen together with corresponding broadcasting service information when the broadcasting service preview request is made by selecting the video service preview item.

9. The DMB terminal as claimed in claim 6, wherein the controller displays preview images for all audio services within all ensembles on the screen together with corresponding broadcasting service information when the broadcasting service preview request is made by selecting the audio service preview item.

10. The DMB terminal as claimed in claim 6, wherein the controller displays preview images for all data services within all ensembles on the screen together with corresponding broadcasting service information when the broadcasting service preview request is made by selecting the data service preview item.

11. The DMB terminal as claimed in claim 6, wherein the controller displays preview images for broadcasting services within all ensembles, the broadcasting services being provided by a service provider selected by a user, on the screen together with corresponding broadcasting service information when the broadcasting service preview request is made by selecting the service provider-based preview item.

12. The DMB terminal as claimed in one of claims 1 to 11, wherein the controller updates the preview images for broadcasting services for every predetermined time period.

13. A method for providing a broadcasting service preview by a DMB terminal in a DMB system having a DMB broadcasting station for providing the DMB terminal with ensembles containing at least one broadcasting service provided by respective service providers, the method comprising the steps of:
receiving all of the ensembles at a broadcasting service preview request of a user;
creating preview images for broadcasting services within each of the ensembles; and
displaying the preview images on a screen together with corresponding broadcasting service information.

14. The method as claimed in claim 13, further comprising a reducing the preview images, converting the preview images so as to be suitable for storage, temporarily storing the preview images, and displaying the preview images on the screen together with corresponding broadcasting service information when the preview images have been created for all broadcasting services within each of the ensembles.

15. The method as claimed in claim 14, further comprising decoding a first intra-frame, setting a decoded frame as a preview image of the preview images, reducing and converting the preview image of the preview images so as to be suitable for storage, and storing the preview image together with corresponding broadcasting service information for a video service within each of the ensembles.

16. The method as claimed in claim 14 or 15, further comprising setting an image, the image having been preset for an audio service, as a preview image of the preview images and storing the preview image of the preview images together with corresponding broadcasting service information for an audio service within each of the ensembles.

17. The method as claimed in one of claims 13 to 16, wherein the broadcasting service preview request is made by selecting an item from a preview menu including at least one of an entire service preview item, a video service preview item, an audio service preview item, a data service preview item, and a service provider-based preview item.

18. The method as claimed in claim 17, further comprising displaying preview images for all broadcasting services within all ensembles on the screen together with the corresponding broadcasting service information when the broadcasting service preview request is made by selecting the entire service preview item.

19. The method as claimed in claim 17, further comprising displaying preview images for all video services within all ensembles on the screen together with the corresponding broadcasting service information when the broadcasting service preview request is made by selecting the video service preview item.

20. The method as claimed in claim 17, further comprising displaying preview images for all audio services within all ensembles on the screen together with the corresponding broadcasting service information when the broadcasting service preview request is made by selecting the audio service preview item.

21. The method as claimed in claim 17, further comprising displaying preview images for all data services within all ensembles on the screen together with the corresponding broadcasting service information when the broadcasting service preview request is made by selecting the data service preview item.

22. The method as claimed in claim 17, further comprising displaying preview images for the broadcasting services within all ensembles, the broadcasting services being provided by a service provider selected by a user, on the screen together with the corresponding broadcasting service information when the broadcasting service preview request is made by selecting the service provider-based preview item.

23. The method as claimed in one of claims 13 to 22, further comprising receiving all ensembles for every predetermined time period, updating the preview images for the broadcasting services within the ensembles, and displaying the preview images on the screen together with the corresponding broadcasting information.
